# EUROPÄISCHE PATENTANMELDUNG

(11) **EP 2 835 389 A1**
(43) Veröffentlichungstag der Anmeldung: **11.02.2015**
(21) Anmeldenummer: 13179541.1
(22) Anmeldetag: 07.08.2013
(51) Int. Cl.: C08G 59/50, C08G 59/56, C08L 63/00, C09D 163/00, C09J 163/00

(54) **Härtbare Zusammensetzung mit hoher Bruchzähigkeit**

(71) Anmelder: Evonik Industries AG, 45128 Essen (DE)
(72) Erfinder: Ortelt, Martina, 48249 Dülmen (DE); Fuchsmann, Dirk, 45721 Haltern am See (DE); Langkabel, Eike, 41844 Wegberg (DE); Kohlstruk, Britta, 48249 Dülmen (DE); Cielaszyk, Katharina, 45770 Marl (DE)

(57) **Zusammenfassung**

Die vorliegende Erfindung betrifft eine härtbare oder ausgehärtete Zusammensetzung umfassend wenigstens ein Epoxidharz, ein offenkettiges Polyamin und eine Verbindung der Formel (1) 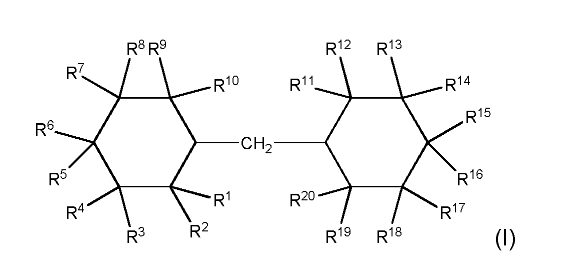 wobei die Reste R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹ und R²⁰ jeweils und unabhängig voneinander aus der Gruppe ausgewählt sind, die Wasserstoff, Methyl, Ethyl, Propyl, Isopropyl und Amin umfasst,
mit der Maßgabe, dass wenigstens ein Rest aus der Gruppe umfassend R¹, R², R³, R⁴, R⁵, R⁶, R⁷, R⁸, R⁹, und R¹⁰ Amin ist und wenigstens ein Rest aus der Gruppe umfassend R¹¹, R¹², R¹³, R¹⁴, R¹⁵, R¹⁶, R¹⁷, R¹⁸, R¹⁹ und R²⁰ Amin ist; Verwendung einer Härterkombination umfassend ein aliphatisches Diamin und einer Verbindung der Formel (I) zur Härtung von Epoxidharz; ein Verfahren zur Beschichtung einer Oberfläche oder zur Imprägnierung eines textilen Flächengebildes, umfassend die Schritte (a) Auftragen und (b) Aushärten der härtbaren Zusammensetzung sowie eine Oberfläche, Faserverbundstoff, Beschichtung oder Klebstoff umfassend die ausgehärtete Zusammensetzung.

## Beschreibung

Die vorliegende Erfindung betrifft eine härtbare oder ausgehärtete Zusammensetzung umfassend wenigstens ein Epoxidharz, ein offenkettiges Polyamin und eine Verbindung der Formel (I) 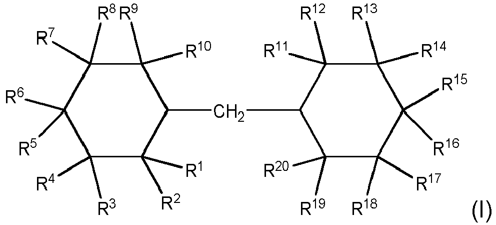 wobei die Reste R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹ und R²⁰ jeweils und unabhängig voneinander aus der Gruppe ausgewählt sind, die Wasserstoff, Methyl, Ethyl, Propyl, Isopropyl und Amin umfasst,
mit der Maßgabe, dass wenigstens ein Rest aus der Gruppe umfassend R¹, R², R³, R⁴, R⁵, R⁶, R⁷, R⁸, R⁹, und R¹⁰ Amin ist und wenigstens ein Rest aus der Gruppe umfassend R¹¹, R¹², R¹³, R¹⁴, R¹⁵, R¹⁶, R¹⁷, R¹⁸, R¹⁹ und R²⁰ Amin ist; eine Verwendung einer Härterkombination umfassend ein aliphatisches Diamin und einer Verbindung der Formel (I) zur Härtung von Epoxidharz; ein Verfahren zur Beschichtung einer Oberfläche oder zur Imprägnierung eines textilen Flächengebildes, umfassend die Schritte (a) Auftragen und (b) Aushärten der härtbaren Zusammensetzung sowie eine Oberfläche, Faserverbundstoff, Beschichtung oder Klebstoff umfassend die ausgehärtete Zusammensetzung.

Epoxidharze sind Bausteine für Polymere, die pro Molekül zwei oder mehr Epoxidgruppen enthalten. Die Reaktion dieser Harze mit einer Reihe von Härtern führt zu vernetzten Polymeren, die industriell stark nachgefragt werden. Diese Polymere können duroplastisch sein und finden beispielsweise im Bereich Civil Engineering (Bauwesen), besonders in Industriefussbodenbeschichtungen, Abdichtungen und Betonsanierungsprodukten, Composites (Faserverbundwerkstoffe), Vergussmassen, Lacken und Klebstoffen Verwendung. Ein Überblick über die Harze und Härter sowie deren Verwendung im Bereich Civil Engineering einschließlich ihrer Eigenschaften findet sich in H. Schuhmann, "Handbuch Betonschutz durch Beschichtungen", Expert Verlag 1992, Seite 396 - 428. Der Einsatz der Harze und Härter für den Bereich Composites wird in P.K.Mallick, "Fiber-Reinforced Composites, Materials, Manufacturing, and Design", CRC Press, Seite 60 - 76 beschrieben.

Epoxidharze werden häufig nicht in gehärteter, vernetzter Form, sondern als härtbare Zusammensetzung oder einzelne Bestandteile solcher Zusammensetzungen vertrieben, die erst vom Anwender kurz vor dem erwünschten Start der Aushärtung zusammengegeben werden. Eine härtbare Mischung umfasst wenigstens ein Epoxidharz mit wenigstens zwei reaktionsfähigen Epoxidgruppen pro Molekül sowie wenigstens einen Härter, bei dem es sich häufig um ein oder mehr als ein Polyamin handelt. Zusätzlich empfehlen sich für viele Anwendungen komplementäre Bestandteile als Hilfsstoffe, beispielsweise Reaktivverdünner, Katalysatoren, Pigmente, Flammschutzmittel, Lösungsmittel, Füllstoffe, Additive oder dergleichen. Geeignete nichtreaktive Bestandteile sind im Stand der Technik beschrieben, beispielsweise in M. A. Boyle, C. J. Martin, an J. D. Neuner, Epoxy Resins, Composites, Vol 21, ASM Handbook ASM International, 2001, Seite 78-89.

Der Stand der Technik lehrt, dass die Eigenschaften der ausgehärteten Epoxidharzzusammensetzung maßgeblich durch die Wahl des als Härter eingesetzten Amins beeinflusst werden können. Die Verwendung von Isophorondiamin (IPD), dem am weitesten verbreiteten cycloaliphatischen Aminhärter, führt zu ausgehärteten Zusammensetzungen mit relativ hoher Glasübergangstemperatur (Tg), bedingt aber auch eine relativ geringe Bruchzähigkeit. Hingegen verursacht die Verwendung von offenkettigen Polyaminen als Härter bei der ausgehärteten Zusammensetzung eine hohe Bruchzähigkeit; diese wird jedoch mit einer deutlich erniedrigten Glasübergangstemperatur erkauft.

Es besteht erheblicher Bedarf an härtbaren Epoxidharzzusammensetzungen mit hoher Bruchzähigkeit und möglichst wenig verringerter Glasübergangstemperatur. Die Erhöhung der Bruchzähigkeit sollte weiterhin nicht mit erheblichen Nachteilen im Hinblick auf andere mechanische Eigenschaften der ausgehärteten Zusammensetzung wie den E-Modul, die Biegefestigkeit und die Korrosions- und Medienbeständigkeit verbunden sein. Schließlich hat die Wahl des Aminhärters Einfluss auf für die Verarbeitbarkeit der noch nicht ausgehärteten Zusammensetzung relevanten Eigenschaften wie die Viskosität oder die Reaktivität.

Im Stand der Technik als besonders vorteilhaft dargestellt ist die Möglichkeit, zur Härtung von Epoxidharzen eine Kombination aus zwei Aminhärtern, insbesondere einem offenkettigen Polyamin wie einem Polyetheramin und aus IPD, zu verwenden. Der Gehalt des offenkettigen Polyamins kann dabei so eingestellt werden, dass die Glasübergangstemperatur einen je nach Anwendung wählbaren kritischen Wert nicht unterschreitet. Die Bruchzähigkeit ergibt sich aus dem gewählten Verhältnis von offenkettigem Polyamin und IPD, kann aber den durch die Menge des offenkettigen Polyamins bestimmten Wert nicht überschreiten.

Vor diesem Hintergrund besteht die der Erfindung zu Grunde liegende Aufgabe darin, eine Härterkombination aus einem offenkettigen Polyamin mit einem weiteren Aminhärter bereitzustellen, die in einer härtbaren Zusammensetzung mit einem Epoxidharz bewirkt, dass die ausgehärtete Epoxidharzmischung eine besonders hohe Bruchzähigkeit bei möglichst hoher Glasübergangstemperatur aufweist.

Diese und weitere Aufgaben werden durch den Gegenstand der vorliegenden Anmeldung und insbesondere auch durch den Gegenstand der beigefügten unabhängigen Ansprüche gelöst, wobei sich Ausführungsformen aus den Unteransprüchen ergeben.

In einem ersten Aspekt wird das der Erfindung zu Grunde liegende Problem gelöst durch eine härtbare oder ausgehärtete Zusammensetzung umfassend wenigstens ein Epoxidharz, ein offenkettiges Polyamin und eine Verbindung der Formel (I) 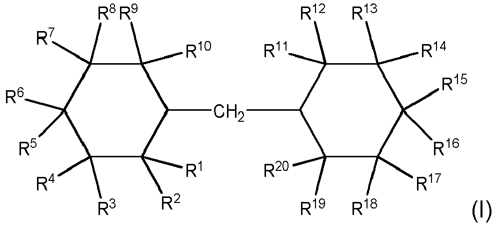 wobei die Reste R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹ und R²⁰ jeweils und unabhängig voneinander aus der Gruppe ausgewählt sind, die Wasserstoff, Methyl, Ethyl, Propyl, Isopropyl und Amin umfasst,
mit der Maßgabe, dass wenigstens ein Rest aus der Gruppe umfassend R¹, R², R³, R⁴, R⁵, R⁶, R⁷, R⁸, R⁹ und R¹⁰ Amin ist und wenigstens ein Rest aus der Gruppe umfassend R¹¹, R¹², R¹³, R¹⁴, R¹⁵, R¹⁶, R¹⁷, R¹⁸, R¹⁹ und R²⁰ Amin ist,
wobei das Epoxidharz bevorzugt zwei Epoxygruppen pro Molekül aufweist und besonders bevorzugt aus der Gruppe ausgewählt ist, die Bisphenol A-diglycidylether und Bisphenol F-diglycidylether umfasst,
wobei das offenkettige Polyamin bevorzugt wenigstens zwei primäre Amingruppen an einem aliphatischen Rückgrat mit einer Kohlenstoffkette aufweist, die ausschließlich aus Kohlenstoff- und Wasserstoffatomen besteht.

In einem zweiten Aspekt wird das der Erfindung zu Grunde liegende Problem gelöst durch eine Verwendung einer Härterkombination umfassend ein offenkettiges Polyamin und einer Verbindung der Formel (I) 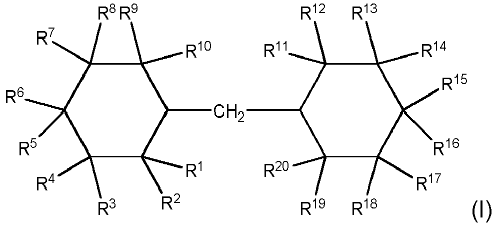 zur Härtung von Epoxidharz,
wobei die Reste R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹ und R²⁰ jeweils und unabhängig voneinander aus der Gruppe ausgewählt sind, die Wasserstoff, Methyl, Ethyl, Propyl, Isopropyl und Amin umfasst,
mit der Maßgabe, dass wenigstens ein Rest aus der Gruppe umfassend R¹, R², R³, R⁴, R⁵, R⁶, R⁷, R⁸, R⁹ und R¹⁰ Amin ist und wenigstens ein Rest aus der Gruppe umfassend R¹¹, R¹², R¹³, R¹⁴, R¹⁵, R¹⁶, R¹⁷, R¹⁸, R¹⁹ und R²⁰ Amin ist,
wobei das offenkettige Polyamin wenigstens zwei primäre Amingruppen an einem aliphatischen Rückgrat mit einer Kohlenstoffkette aufweist, die ausschließlich aus Kohlenstoff- und Wasserstoffatomen besteht.

In einer ersten Ausführungsform des ersten oder zweiten Aspekts wird das Problem gelöst durch eine härtbare oder ausgehärtete Zusammensetzung oder Verwendung, wobei genau ein Rest aus der Gruppe umfassend R¹, R², R³, R⁴, R⁵, R⁶, R⁷, R⁸, R⁹ und R¹⁰ Amin ist und genau ein Rest aus der Gruppe umfassend R¹¹, R¹², R¹³, R¹⁴, R¹⁵, R¹⁶, R¹⁷, R¹⁸, R¹⁹ und R²⁰ Amin ist.

In einer zweiten Ausführungsform des ersten oder zweiten Aspekts, die auch eine Ausführungsform der ersten Ausführungsform darstellt, wird das Problem gelöst durch eine härtbare oder ausgehärtete Zusammensetzung oder Verwendung, wobei genau ein Rest aus der Gruppe umfassend R¹, R², R³, R⁴, R⁵, R⁶, R⁷, R⁸, R⁹ und R¹⁰ Amin ist und genau ein Rest aus der Gruppe umfassend R¹¹, R¹², R¹³, R¹⁴, R¹⁵, R¹⁶, R¹⁷, R¹⁸, R¹⁹ und R²⁰ Amin ist und jeder andere Rest Wasserstoff ist.

In einer dritten Ausführungsform des ersten oder zweiten Aspekts, die auch eine Ausführungsform der ersten bis zweiten Ausführungsform darstellt, wird das Problem gelöst durch eine härtbare oder ausgehärtete Zusammensetzung oder Verwendung, wobei es sich bei der Verbindung der Formel (I) um Diaminodicyclohexylmethan handelt.

In einer vierten Ausführungsform des ersten oder zweiten Aspekts, die auch eine Ausführungsform der ersten bis dritten Ausführungsform darstellt, wird das Problem gelöst durch eine härtbare oder ausgehärtete Zusammensetzung oder Verwendung, wobei das offenkettige Polyamin eine substituierte oder unsubstituierte Kohlenstoffkette mit einer Gesamtlänge von vier bis acht, bevorzugt sechs Kohlenstoffatomen aufweist, wobei die Kohlenstoffkette bevorzugt mit Alkylgruppen substituiert ist.

In einer fünften Ausführungsform des ersten oder zweiten Aspekts, die auch eine Ausführungsform der ersten bis vierten Ausführungsform darstellt, wird das Problem gelöst durch eine härtbare oder ausgehärtete Zusammensetzung oder Verwendung nach einem der Ansprüche 1 bis 6, wobei das offenkettige Polyamin die Formel H₂N-(CH₂)_{z}-NH₂ aufweist und z 2 bis 12 ist.

In einer sechsten Ausführungsform des ersten oder zweiten Aspekts, die auch eine Ausführungsform der ersten bis fünften Ausführungsform darstellt, wird das Problem gelöst durch eine härtbare oder ausgehärtete Zusammensetzung oder Verwendung, wobei das offenkettige Polyamin Hexamethylendiamin oder Trimethylhexamethylendiamin ist.

In einer siebten Ausführungsform des ersten oder zweiten Aspekts, die auch eine Ausführungsform der ersten bis sechsten Ausführungsform darstellt, wird das Problem gelöst durch eine härtbare oder ausgehärtete Zusammensetzung oder Verwendung, wobei das Gewichtsverhältnis der Verbindung der Formel (I) zu offenkettigem Polyamin wenigstens 50 : 50 beträgt.

In einer achten Ausführungsform des ersten oder zweiten Aspekts, die auch eine Ausführungsform der ersten bis siebten Ausführungsform darstellt, wird das Problem gelöst durch eine härtbare oder ausgehärtete Zusammensetzung oder Verwendung, wobei das Gewichtsverhältnis der Verbindung der Formel (I) zu dem offenkettigen Polyamin 70 : 30 bis 90 : 10 beträgt.

In einer neunten Ausführungsform des ersten oder zweiten Aspekts, die auch eine Ausführungsform der ersten bis achten Ausführungsform darstellt, wird das Problem gelöst durch eine härtbare oder ausgehärtete Zusammensetzung, wobei das Epoxidharz aus der Gruppe umfassend Epoxidharze auf der Basis von Bisphenol A-diglycidylether, Bisphenol F-diglycidylether, kettenverlängerte Bisphenol-A-Harze mit Molmassen von 700 bis 5000, epoxidierte Novolake, Triglycidyl-p-aminophenol, Tetraglycidyl-methylendianilin und Hexahydrophthalsäure-diglycidylester und cycloaliphatische Typen ausgewählt ist.

In einer zehnten Ausführungsform des ersten Aspekts, die auch eine Ausführungsform der ersten bis neunten Ausführungsform darstellt, wird das Problem gelöst durch eine härtbare Zusammensetzung, weiter umfassend wenigstens einen weiteren Stoff ausgewählt aus der Gruppe umfassend Reaktionsbeschleuniger, bevorzugt aus der Gruppe organischer Säuren oder tertiärer Amine, Reaktivverdünner, bevorzugt aus der Gruppe mono- oder polyfunktioneller, bei Raumtemperatur flüssiger Epoxidverbindungen, Lösungsmittel, Pigment, Flammschutzmittel, Füllstoff und Additiv.

In einer elften Ausführungsform des ersten Aspekts, die auch eine Ausführungsform der ersten bis elften Ausführungsform darstellt, wird das Problem gelöst durch eine härtbare Zusammensetzung, weiter umfassend einen Reaktivverdünner, wobei das Gewichtsverhältnis von Epoxidharz zu Reaktivverdünner 75 : 25 bis 95 : 5, bevorzugt 80 : 20 bis 90 : 10 beträgt.

In einem dritten Aspekt wird das der Erfindung zu Grunde liegende Problem gelöst durch ein Verfahren zur Beschichtung einer Oberfläche oder zur Imprägnierung eines textilen Flächengebildes, umfassend die Schritte
(a) Auftragen und
(b) Aushärten der härtbaren Zusammensetzung nach dem ersten Aspekt der vorliegenden Erfindung.

In einem vierten Aspekt wird das der Erfindung zu Grunde liegende Problem gelöst durch eine Oberfläche, Faserverbundstoff, Beschichtung oder Klebstoff umfassend die ausgehärtete Zusammensetzung nach dem ersten Aspekt der vorliegenden Erfindung.

Die vorliegende Erfindung beruht auf der überraschenden Erkenntnis der Erfinder, dass das Ersetzen von IPD gegen eine Verbindung der Formel (I) in einer härtbaren Zusammensetzung mit einem offenkettigen Polyamin als Co-Härter und mit einem Epoxidharz dazu führt, dass die ausgehärtete Zusammensetzung deutlich günstigere Materialeigenschaften aufweist, insbesondere eine deutlich höhere Bruchzähigkeit bei deutlich höherer Glasübergangstemperatur.

Die erfindungsgemäße härtbare oder ausgehärtete Zusammensetzung umfasst zunächst ein Epoxidharz. In einer bevorzugten Ausführungsform bedeutet der Begriff "Epoxidharz", wie hierin verwendet, eine organische Verbindung mit wenigstens zwei mit Härtern, bevorzugt Aminhärtern, reaktionsfähigen Epoxidgruppen. Bevorzugt ist das Epoxidharz aus der Gruppe ausgewählt, die Epoxidharze auf der Basis von Bisphenol A-diglycidylether, Bisphenol F-diglycidylether und cycloaliphatische Typen umfasst. Cycloaliphatische Typen sind zum Beispiel 3,4-Epoxycyclohexyl-epoxyethan oder 3,4-Epoxycyclohexylmethyl-3,4-epoxy-cyclohexan-carboxylat. Weitere Beispiele für erfindungsgemäß verwendbare Epoxidharze umfassen kettenverlängerte Bisphenol-A-Harze mit Molmassen von 700 bis 5000, epoxidierte Novolake, Triglycidyl-p-aminophenol, Tetraglycidyl-methylendianilin und Hexahydrophthalsäure-diglycidylester. In einer bevorzugten Ausführungsform umfasst das Epoxidharz wenigstens zwei Epoxidgruppen, deren Kohlenstoff-Kohlenstoff-Bindung nicht Teil eines größeren aliphatischen Rings im gleichen Molekül ist. Bisphenol A-basierte Epoxidharze und Bisphenol F-basierte Epoxidharze sind erfindungsgemäß besonders bevorzugt. Im Stand der Technik sind zahlreiche weitere geeignete offenkettige Epoxide beschrieben, beispielsweise in der US 6,248,204. Derartige Verbindungen sind im Handel erhältlich. Die erfindungsgemäße Zusammensetzung kann dabei auch mehr als ein Epoxidharz umfassen. Für den Fall dass die härtbare Zusammensetzung neben den Reaktivkomponenten weitere Zusatzstoffe wie Lösemittel oder Füllstoffe enthält, beträgt der Anteil der Gesamtheit der Epoxidharze und Aminhärter an der der Zusammensetzung bevorzugt wenigstens 1, 5, 10, 20, 30, 40, 50, 60, 70, 80, 90 oder 99 Gewichtsprozent. Das Epoxidharz weist bevorzugt 1,5 bis 2,5, noch bevorzugter zwei Epoxygruppen pro Molekül auf. In einer weiteren bevorzugten Ausführungsform wird eine Mischung umfassend mehr als ein Epoxidharz verwendet, die durchschnittlich 1,5 bis 2,5, noch bevorzugter 1,8 bis 2,2, am bevorzugtesten zwei Epoxygruppen pro Molekül aufweist. In einer weiteren bevorzugten Ausführungsform ist das wenigstens eine Epoxidharz aus der Gruppe ausgewählt, die Bisphenol A-diglycidylether und Bisphenol F-diglycidylether umfasst.

Die erfindungsgemäße härtbare oder ausgehärtete Zusammensetzung umfasst als einen der beiden essentiellen Aminhärter ein offenkettiges Polyamin. In einer bevorzugten Ausführungsform wird unter dem Begriff "offenkettiges Polyamin", wie hierin verwendet, eine organische Verbindung mit wenigstens zwei, bevorzugt genau zwei, mit Epoxidgruppen reaktiven Amingruppen verstanden, die eine lineare Struktur aufweist, wobei Substitutionen und Verzweigungen, beispielsweise mit einer oder mehr als einer Alkylgruppe möglich ist. Sofern das Polyamin genau zwei Amingruppen aufweist, ist bevorzugt, dass wenigstens eine davon eine primäre Amingruppe ist. Das Rückgrat des offenkettigen Amins kann aliphatischer Natur sein, es kann sich jedoch auch um einen Polyether oder um ein Polyamin mit einem Rückgrat aus einem oder mehreren sekundären Aminen handeln. Im Stand der Technik sind zahlreiche weitere geeignete offenkettige Polyamine beschrieben, beispielsweise in der US 6,248,204.

In einer besonders bevorzugten Ausführungsform handelt es sich bei dem "offenkettigen Polyamin" um eine Verbindung, die wenigstens zwei, bevorzugt genau zwei primäre Amingruppen an einem aliphatischen Rückgrat umfasst oder aus diesen Amingruppen und dem aliphatischen Rückgrat besteht, wobei es sich bei dem aliphatischen Rückgrat bevorzugt um eine verzweigte oder lineare, jedoch nicht zyklische Kohlenwasserstoffkette handelt, und wobei die Kohlenwasserstoffkette ausschließlich aus Kohlenstoff- und Wasserstoffatomen besteht.

In einer bevorzugtesten Ausführungsform handelt es sich bei dem offenkettigen Polyamin um das offenkettige Polyamin Hexamethylendiamin oder Trimethylhexamethylendiamin. Dabei kann es sich um 2,2,4-Trimethylhexamethylendiamin, 2,4,4-Trimethylhexamethylendiamin oder, besonders bevorzugt, aus einer Mischung von 2,2,4-Trimethylhexamethylendiamin und 2,4,4-Trimethylhexamethylendiamin handeln.

Für die erfindungsgemäße härtbare Zusammensetzung kann das Verhältnis des Epoxidharzanteils, der die Gesamtheit der verwendeten Epoxidharze umfasst, und des Härteranteils, der die Gesamtheit der verwendeten Aminhärter umfasst, an der erfindungsgemäßen Zusammensetzung derart gewählt werden, dass Epoxidgruppen und Amingruppen in einem stöchiometrischen Verhältnis, aber auch in einem unter- oder überstöchimetrischen Verhältnis vorliegen. Für den Fall, dass mit Hinblick auf den zeitlichen Ablauf der Reaktion eine Latenz erwünscht ist, ist ein unterstöchiometrisches Verhältnis bevorzugt, d. h. es ist ein Überschuss an Epoxidgruppen vorhanden.

Die Formulierung, dass eine härtbare oder ausgehärtete Zusammensetzung Epoxidharz, Härter und weitere Stoffe "umfasst", bedeutet in einer bevorzugten Ausführungsform, wie hierin verwendet, dass die entsprechenden Stoffe im Fall der härtbaren, d. h. noch nicht oder noch nicht vollständig abreagierten Zusammensetzung, in freier, reaktiver Form enthält, im Fall der ausgehärteten Zusammensetzung bedeutet sie, dass die Bestandteile in abreagierter Form als Bestandteile der bei der Aushärtung entstandenen vernetzen Polymere enthalten sind. Beispielsweise umfassen erfindungsgemäße ausgehärtete Zusammensetzungen auch offenkettige Polyamine, die keine freien Amingruppen mehr aufweisen, sondern mit Epoxidgruppen der Harzkomponente abreagierte Amingruppen.

Die erfindungsgemäße härtbare oder ausgehärtete Zusammensetzung umfasst als zweiten der beiden essentiellen Aminhärter eine Verbindung der Formel (I) 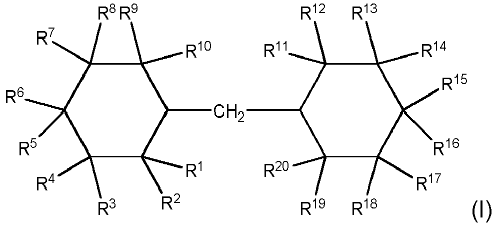 wobei die Reste R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹ und R²⁰ jeweils und unabhängig voneinander aus der Gruppe ausgewählt sind, die Wasserstoff, Methyl, Ethyl, Propyl, Isopropyl und Amin umfasst,
mit der Maßgabe, dass wenigstens ein Rest aus der Gruppe umfassend R¹, R², R³, R⁴, R⁵, R⁶, R⁷, R⁸, R⁹, und R¹⁰ Amin ist und wenigstens ein Rest aus der Gruppe umfassend R¹¹, R¹², R¹³, R¹⁴, R¹⁵, R¹⁶, R¹⁷, R¹⁸, R¹⁹ und R²⁰ Amin ist. In einer bevorzugten Ausführungsform ist genau ein Rest aus der Gruppe umfassend R¹, R², R³, R⁴, R⁵, R⁶, R⁷, R⁸, R⁹ und R¹⁰ Amin und genau ein Rest aus der Gruppe umfassend R¹¹, R¹², R¹³, R¹⁴, R¹⁵, R¹⁶, R¹⁷, R¹⁸, R¹⁹ und R²⁰ Amin. In einer besonders bevorzugten Ausführungsform sind die Reste R², R⁴, R⁶, R⁸, R¹⁰, R¹², R¹⁴, R¹⁶, R¹⁸ und R²⁰ dabei alle Wasserstoff.

In einer bevorzugtesten Ausführungsform handelt sich bei der Verbindung nach Formel (I) um Diaminodicyclohexylmethan. Diaminodicyclohexylmethan umfasst eine Reihe verschiedener Isomeren und Mischungen davon. In einer besonders bevorzugten Ausführungsform handelt es sich dem Diaminodicyclohexylmethan um 4,4'- Diaminodicyclohexylmethan. Die verschiedenen Isomeren werden von verschiedenen Herstellern in Form von Mischungen mit der Handelsbezeichnung "PACM" vertrieben, die erfindungsgemäß als Diaminodicyclohexylmethan verwendet werden kann und beispielsweise 15 bis 60 Gewichtsprozent, trans, trans-Diaminodicyclohexylmethan, 30 bis 60 Gewichtsprozent cis, trans- Diaminodicyclohexylmethan, 5 bis 40 Gewichtsprozent cis, cis- Diaminodicyclohexylmethan und 1 bis 10 Gewichtsprozent ortho, para- Diaminodicyclohexylmethan umfassen. Zur erfindungsgemäßen Verwendung eignet sich jedoch auch jedes der genannten Isomeren. Besonders bevorzugt werden trans, trans-Diaminodicyclohexylmethan oder cis, trans- Diaminodicyclohexylmethan erfindungsgemäße als Verbindung der Formel (I) verwendet. Es können Mischungen verwendet werden, die andere Isomere als trans, trans-Diaminodicyclohexylmethan, cis, trans-Diaminodicyclohexylmethan, cis, cis- Diaminodicyclohexylmethan oder ortho, para-Diaminodicyclohexylmethan umfassen. In einer bevorzugten Ausführungsform wird als Verbindung der Formel (I) eine Isomerenmischung des Diaminodicyclohexylmethan verwendet, wobei der Anteil des trans, trans- Diaminodicyclohexylmethans 17 bis 24 Gewichtsprozent beträgt und besonders bevorzugt der Anteil des Isomere cis,trans- Diaminodicyclohexylmethan, cis-cis- Diaminodicyclohexylmethan und 2,4- Diaminodicyclohexylmethan 40 bis 45 Gewichtsprozent, 20 bis 25 Gewichtsprozent bzw. 10 bis 14 Gewichtsprozent beträgt. Eine entsprechende Isomerenmischung ist unter dem Handelsnamen "Vestamin PACM" im Handel erhältlich.

Die Verbindungen der Formel (I) sind im Handel erhältlich oder können aus den entsprechenden aromatischen Vorläufern durch Hydrierung gewonnen werden. Ein geeignetes Verfahren zur Hydrierung ist in der EP 1 519 912 beschrieben.

Das offenkettige Polyamin weist bevorzugt eine substituierte oder unsubstituierte Kohlenstoffkette mit einer Gesamtlänge von 1, 2, 3, 4, 5, 6, 7, 8, 10, 11, 12, 13, 14, 15, 16, 17, 18, 19 oder 20 Kohlenstoffatomen auf, bevorzugt 4 bis 8, am bevorzugtesten 6 Kohlenstoffatomen. Im Falle einer substituierten Kohlenstoffkette handelt es sich bei den Substituenten bevorzugt um Alkylsubstituenten, beispielsweise Methyl, Ethyl, Propyl, Butyl und Isopropyl.

Bevorzugt handelt es sich bei dem offenkettigen Polyamin um eine Verbindungen der Formel H₂N-(CH₂)_{z}-NH₂, wobei z 1, 2, 3, 4, 5, 6, 7, 8, 9, 10, 12, 13, 14, 15, 16, 17, 18, 19 oder 20 ist, bevorzugt 2 bis 12.

Die Verbindung der Formel (I) und das offenkettige Polyamin werden bevorzugt nicht in beliebigem Gewichtsverhältnis zueinander eingesetzt, sondern in einer Mischung, die überwiegend die Verbindung der Formel (I) umfasst. Das Gewichtsverhältnis der Verbindung der Formel (I) zum offenkettigen Polyamin beträgt bevorzugt mehr als 50 : 50, bevorzugt 60 : 40 bis 95 : 5, noch bevorzugter 65: 35 bis 92,5 : 7,5, am bevorzugtesten 70 : 30 bis 90 to 10. In einer bevorzugten Ausführungsform bedeutet ein Verhältnis der Verbindung (I) zum offenkettigen Polyamin von mehr als 50:50 dabei, dass das Gewicht der Verbindung (I) in der Zusammensetzung das des offenkettigen Polyamins übersteigt. Beispielsweise können in der Zusammensetzung 51 Gewichtsteile der Verbindung (I) und 50 Gewichtsteile des offenkettigen Polyamins enthalten sein.

Die erfindungsgemäße härtbare Zusammensetzung umfasst neben dem Epoxidharz, dem offenkettigen Polyamin und der Verbindung der Formel (I) bevorzugt einen Reaktivverdünner. Der Reaktivverdünner kann der Einstellung einer zur Herstellung, Homogenisierung, Verarbeitung oder Anwendung geeigneten Viskosität dienen. Der Reaktivverdünner ist bevorzugt aus der Gruppe mono-, bi- oder polyfunktioneller, bei Raumtemperatur flüssiger Epoxidverbindungen, z. B. Butylglycidether, Phenylglycidether, Glycidether der Versatic-Säure, C12-C14-Glycidether, C13-C15-Glycidether, p-tert-Butyl-Phenylglycidether, 1,6-Hexandiglycidether, 1,4-Butandiglycidether, Neopently-glykoldiglycidether, Glycerintriglycidether, Pentaerythropoly-glycidether, Trimethylolpropantriglycidether und Kresylglycidether ausgewählt.

Es ist vorteilhaft, wenn der Reaktivverdünner in einem Mischungsverhältnis zum Epoxidharz verwendet wird, in dem die Zusammensetzung genug davon umfasst, um verarbeitbar zu sein. Bevorzugt beträgt das Gewichtsverhältnis von Epoxidharz zu Reaktivverdünner 75 : 25 bis 95 : 5, noch bevorzugter 80 : 20 bis 90 : 10.

In einer weiteren bevorzugten Ausführungsform umfasst die die erfindungsgemäße härtbare Zusammensetzung wenigstens einen Reaktionsbeschleuniger, bevorzugt aus der Gruppe organischer Säuren oder tertiärer Amine, z. B. Salicylsäure, Aminoethylpiperazin, Tris-(N,N-dimethylaminomethyl)-phenol. Weitere geeignete Reaktionsbeschleuniger sind im Stand der Technik beschrieben, beispielsweise in der US 3,261,809.

In einer weiteren bevorzugten Ausführungsform umfasst die erfindungsgemäße härtbare Zusammensetzung wenigstens ein Lösemittel, z.B. Xylol, Aceton oder Butylacetat.

In einer weiteren bevorzugten Ausführungsform umfasst die die erfindungsgemäße härtbare oder ausgehärtete Zusammensetzung Pigmente, Füllstoffe und/oder Additive.

Für den Fall, dass Oberflächen mit der erfindungsgemäßen härtbaren oder ausgehärteten Zusammensetzung beschichtet oder textile Flächengebilde mit der erfindungsgemäßen härtbaren oder ausgehärteten Zusammensetzung imprägniert werden sollen, wird zunächst die Zusammensetzung in flüssiger, noch nicht ausgehärteter Form auf die Oberfläche oder das textile Flächengebilde aufgetragen. Das Auftragen kann ein Kontaktieren ausschließlich mit der Oberfläche, beispielsweise durch Bestreichen, aber auch eine Behandlung des gesamten Gegenstands, beispielsweise durch Eintauchen oder Fluten, umfassen. Die härtbare oder ausgehärtete Zusammensetzung eignet sich zur Behandlung zahlreicher Oberflächen aus unterschiedlichen Materialien. Ebenso können verschiedene textile Flächengebilde imprägniert werden. In einer bevorzugten Ausführungsform wird unter dem Begriff "textiles Flächengebilde", wie hierin verwendet, ein jedes Gebilde aus mit einer Epoxidharzzusammensetzung benetzbaren Fasern verstanden, beispielsweise Gewebe, multiaxial-Gelege, UD (unidirektional)-Gelege, UD-Tapes, Nonwovens wie Vliese, Papiere, Schnittglasmatten und Endlos(roving)matten. Die Fasern können beispielsweise aus Glas, Carbon, Aramid oder Basalt oder anderen Naturfasern (z. B. Baumwolle oder Hanf) bestehen.

Das Aushärten der erfindungsgemäßen härtbaren Zusammensetzung in Schritt b) des erfindungsgemäßen Verfahrens läuft unter Bedingungen ab, die die Aushärtung der jeweiligen gewählten härtbaren Zusammensetzung ermöglichen. Diese Bedingungen richten sich nach der konkreten Zusammensetzung, der Fachmann kann anhand seines Fachwissens oder durch routinemäßiges Experimentieren jedoch leicht geeignete Bedingungen auffinden. Beispielsweise fördern erhöhte Temperaturen und die Anwesenheit von Reaktionsbeschleunigern das Aushärten der Zusammensetzung. Weitere Wege und für die Steuerung der Aushärtung zu beachtende Faktoren sind im Stand der Technik beschrieben, beispielsweise in Lee & Neville "Handbook of Epoxy resins" McGraw Hill Inc. 1967, Chapter 6 'Characterization of Epoxy-Resin Curing Agent Systems', Seiten 6-1 bis 6-20.

Die vorliegende Erfindung wird weiterhin durch die folgenden Figuren und nicht beschränkenden Beispiele veranschaulicht, denen weitere Merkmale, Ausführungsformen, Aspekte und Vorteile der vorliegenden Erfindung entnommen werden können.

### Beispiele:

Die folgenden Beispiele zeigen, dass bei Verwendung einer erfindungsgemäßen Härterkombination umfassend ein offenkettiges Polyamin und eine Verbindung der Formel (I) überraschend hohe Zuwächse in der Bruchzähigkeit des ausgehärteten Epoxids bei vergleichbaren Werten für andere Materialeigenschaften wie Tg, Festigkeiten und E-Modul erzielt wird. Als offenkettiges Polyamin bzw. Verbindung der Formel (I) werden Trimethylhexamethylendiamin (TMD) oder Hexamethylendiamin (HDA) bzw. Diaminodicyclohexylmethan (PACM) eingesetzt.

### Versuchsbeschreibung:

Wo erforderlich, wird zunächst die Härtermischung hergestellt (Becherglas, Magnetrührer) und mit dem Epoxidharzanteil vereinigt. Die Zubereitung wird in einem Speedmixer des Typs DAC600.1 VAC-P der Firma Hauschild in 20 s mit 1000 upm und 100 s mit 1500 upm unter Vakuum vermischt. Die so erhaltene, entgaste Mischung wird in 2 Stahlformen mit den Abmessungen 200 x 200 x 6 mm und 200 x 200 x 4 mm, die auf Härtetemperatur (im Beispiel hier auf 120°C) vorgewärmt sind, gegossen. Die Formoberflächen wurden vorher mit dem Trennmittel ACMOScoat 82-7008 eingetrennt. Die mit der Harz/Härtermischung befüllten Formen werden anschließend zur Härtung für 30 min bei 120°C in einem Umluft-Wärmeschrank belassen. Nach Beendigung der Härtung kühlen die Gießformen im abgeschalteten Ofen bei geöffneter Tür ab. An den 4 mm-Platten wird die Glasübergangstemperatur (Tg) mittels DSC-Messung mit einer Aufheizrate von 10 K/min und die Biegefestigkeit nach DIN EN ISO 178 bestimmt. An den 6 mm- Platten wird die Bruchzähigkeit (K1c) in Anlehnung an ASTM D 5045 (CT-Prüfkörper mit W= 35 mm) mit der in der Deutschen Patentschrift DE 100 23 752 beschriebenen Methode ermittelt.

### Ergebnisse:

| **Formulierung** | **PACM 100 828** | **PACM/ TMD 82:20 828** | **PACM/ TMD 70:30 828** | **PACM/HD A 80:20 828** | **IPD 100 828** | **IPD/TMD 80:20 828** | **TMD 100 828** |
|---|---|---|---|---|---|---|---|
| **Zusammensetzung [g]** | **Vergleichsbeispiel 1** | **Beispiel 1** | **Beispiel 2** | **Beispiel 3** | **Vergleichsbeispiel 2** | **Vergleichsbeispiel 3** | **Vergleichsbeispiel 4** |
| Vestamin PACM | 100 | 80 | 70 | 80 | | | |
| Vestamin TMD | | 20 | 30 | | | 20 | 100 |
| Vestamin IPD | | | | | 100 | 80 | |
| HDA | | | | 20 | | | |
| Epikote 828 | 358 | 381 | 393 | 416 | 441 | 448 | 475 |
| **Tg** (DSC) nach Härtung 30' @ 120°C | 134°C | 130°C | 129°C | 129°C | 129°C | 117°C | 104°C |
| **K_{1c} [MN/m^{3/2}]** (Härtung 30' @ 120°C) | 0,79 | 0,90 | 1,00 | 1,00 | 0,64 | 0,64 | 1,4 |
| **Biegeprüfung DIN EN ISO 178** | | | | | | | |
| Biegefestigkeit [Mpa] | 110 | 112 | 108 | 101 | 130 | 113 | 87 |
| Bruchdehnung [%] oder maximale Dehnung [%] | 6,2 | 6,6 | 7,0 | 7,1 | 6,2 | 5,7 | 7,1 |
| E-Modul [MPa] | 2572 | 2587 | 2602 | 2510 | 2896 | 2707 | 2673 |

| | | | | | | | |
|---|---|---|---|---|---|---|---|
| HDA und Epikot 828 wurden von Sigma Aldrich bzw. Momentive bezogen. | | | | | | | |

### Diskussion der Ergebnisse:

Es war bekannt, dass Vestamin TMD-gehärtete Epoxidharzformulierungen eine höhere Bruchzähigkeit der gehärteten Formulierungen bei - allerdings - geringem Tg bieten (Vergleichsbeispiel 4). Bei dem Versuch, die Bruchzähigkeit Vestamin PACM- und Vestamin IPD-gehärteter Zusammensetzungen durch geeignete Formulierung dieser Härter mit Vestamin TMD zu verbessern, wurde überraschend gefunden, dass sich bei PACM-basierten Formulierungen die Bruchzähigkeit (K1c) und auch die Bruchdehnung steigern lässt, ohne dass signifikante Verluste in der Glasübergangstemperatur auftreten. Ebenso bleibt die Biegefestigkeit und der Biege-E-Modul im Rahmen der Versuchsschwankung gleich (Beispiele 1 und 2). Ein ähnlicher Effekt ist bei Verwendung von HDA als offenkettiges Polyamin zu beobachten (Beispiel 3). Stellt man jedoch aus Vestamin IPD und Vestamin TMD eine anteilsmäßig gleiche (hier 80:20 Gew.-Teile) Härtermischung her, so findet man keine Verbesserung der Bruchzähigkeit, aber den erwarteten deutlichen Abfall der thermischen (Glasübergangstemperatur) und mechanischen Eigenschaften (Vergleichsbeispiel 3).

## Patentansprüche

1. Härtbare oder ausgehärtete Zusammensetzung umfassend wenigstens ein Epoxidharz, ein offenkettiges Polyamin und eine Verbindung der Formel (I) 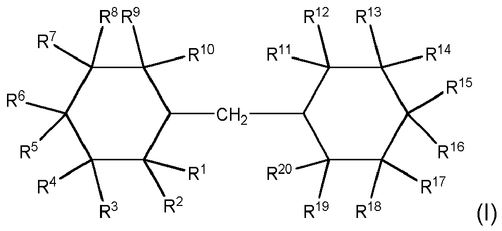 wobei die Reste R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹ und R²⁰ jeweils und unabhängig voneinander aus der Gruppe ausgewählt sind, die Wasserstoff, Methyl, Ethyl, Propyl, Isopropyl und Amin umfasst,
mit der Maßgabe, dass wenigstens ein Rest aus der Gruppe umfassend R¹, R², R³, R⁴, R⁵, R⁶, R⁷, R⁸, R⁹ und R¹⁰ Amin ist und wenigstens ein Rest aus der Gruppe umfassend R¹¹, R¹², R¹³, R¹⁴, R¹⁵, R¹⁶, R¹⁷, R¹⁸, R¹⁹ und R²⁰ Amin ist,
wobei das Epoxidharz bevorzugt zwei Epoxygruppen pro Molekül aufweist und
wobei das offenkettige Polyamin wenigstens zwei primäre Amingruppen an einem aliphatischen Rückgrat mit einer Kohlenstoffkette aufweist, die ausschließlich aus Kohlenstoff- und Wasserstoffatomen besteht.

2. Verwendung einer Härterkombination umfassend ein offenkettiges Polyamin und eine Verbindung der Formel (I) 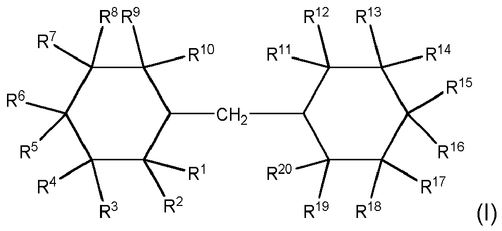 zur Härtung von Epoxidharz,
wobei die Reste R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹ und R²⁰ jeweils und unabhängig voneinander aus der Gruppe ausgewählt sind, die Wasserstoff, Methyl, Ethyl, Propyl, Isopropyl und Amin umfasst,
mit der Maßgabe, dass wenigstens ein Rest aus der Gruppe umfassend R¹, R², R³, R⁴, R⁵, R⁶, R⁷, R⁸, R⁹ und R¹⁰ Amin ist und wenigstens ein Rest aus der Gruppe umfassend R¹¹, R¹², R¹³, R¹⁴, R¹⁵, R¹⁶, R¹⁷, R¹⁸, R¹⁹ und R²⁰ Amin ist
wobei das offenkettige Polyamin wenigstens zwei primäre Amingruppen an einem aliphatischen Rückgrat mit einer Kohlenstoffkette aufweist, die ausschließlich aus Kohlenstoff- und Wasserstoffatomen besteht.

3. Härtbare oder ausgehärtete Zusammensetzung oder Verwendung nach einem der Ansprüche 1 bis 2, wobei genau ein Rest aus der Gruppe umfassend R¹, R², R³, R⁴, R⁵, R⁶, R⁷, R⁸, R⁹ und R¹⁰ Amin ist und genau ein Rest aus der Gruppe umfassend R¹¹, R¹², R¹³, R¹⁴, R¹⁵, R¹⁶, R¹⁷, R¹⁸, R¹⁹ und R²⁰ Amin ist.

4. Härtbare oder ausgehärtete Zusammensetzung oder Verwendung nach einem der Ansprüche 1 bis 3, wobei genau ein Rest aus der Gruppe umfassend R¹, R², R³, R⁴, R⁵, R⁶, R⁷, R⁸, R⁹ und R¹⁰ Amin ist und genau ein Rest aus der Gruppe umfassend R¹¹, R¹², R¹³, R¹⁴, R¹⁵, R¹⁶, R¹⁷, R¹⁸, R¹⁹ und R²⁰ Amin ist und jeder andere Rest Wasserstoff ist.

5. Härtbare oder ausgehärtete Zusammensetzung oder Verwendung nach einem der Ansprüche 1 bis 4, wobei es sich bei der Verbindung der Formel (I) um Diaminodicyclohexylmethan handelt.

6. Härtbare oder ausgehärtete Zusammensetzung oder Verwendung nach einem der Ansprüche 1 bis 5, wobei das offenkettige Polyamin eine substituierte oder unsubstituierte Kohlenstoffkette mit einer Gesamtlänge von vier bis acht, bevorzugt sechs Kohlenstoffatomen aufweist, wobei die Kohlenstoffkette bevorzugt mit Alkylgruppen substituiert ist.

7. Härtbare oder ausgehärtete Zusammensetzung oder Verwendung nach einem der Ansprüche 1 bis 6, wobei das offenkettige Polyamin die Formel H₂N-(CH₂)_{z}-NH₂ aufweist und z 2 bis 12 ist.

8. Härtbare oder ausgehärtete Zusammensetzung oder Verwendung nach einem der Ansprüche 1 bis 7, wobei das offenkettige Polyamin Hexamethylendiamin oder Trimethylhexamethylendiamin ist.

9. Härtbare oder ausgehärtete Zusammensetzung oder Verwendung nach einem der Ansprüche 1 bis 8, wobei das Gewichtsverhältnis der Verbindung der Formel (I) zu offenkettigem Polyamin wenigstens 50 : 50 beträgt.

10. Härtbare oder ausgehärtete Zusammensetzung oder Verwendung nach Anspruch 9, wobei das Gewichtsverhältnis der Verbindung der Formel (I) zu offenkettigem Polyamin 70 : 30 bis 90 : 10 beträgt.

11. Härtbare oder ausgehärtete Zusammensetzung nach einem der Ansprüche 1 bis 10, wobei das Epoxidharz aus der Gruppe umfassend Bisphenol A-diglycidylether und Bisphenol F-diglycidylether ausgewählt ist.

12. Härtbare Zusammensetzung nach einem der Ansprüche 1 oder 3 bis 11, weiter umfassend wenigstens einen weiteren Stoff ausgewählt aus der Gruppe umfassend Reaktionsbeschleuniger, bevorzugt aus der Gruppe organischer Säuren oder tertiärer Amine, Reaktivverdünner, bevorzugt aus der Gruppe mono- oder polyfunktioneller, bei Raumtemperatur flüssiger Epoxidverbindungen, Lösungsmittel, Pigment, Füllstoff, Flammschutzmittel und Additiv.

13. Härtbare Zusammensetzung nach einem der Ansprüche 1 oder 3 bis 12, weiter umfassend einen Reaktivverdünner, wobei das Gewichtsverhältnis von Epoxidharz zu Reaktivverdünner 75 : 25 bis 95 : 5, bevorzugt 80 : 20 bis 90 : 10 beträgt.

14. Verfahren zur Beschichtung einer Oberfläche oder zur Imprägnierung eines textilen Flächengebildes, umfassend die Schritte
(a) Auftragen und
(b) Aushärten der härtbaren Zusammensetzung nach einem der Ansprüche 1 oder 3 bis 13.

15. Oberfläche, Faserverbundstoff, Beschichtung oder Klebstoff umfassend die ausgehärtete Zusammensetzung nach einem der Ansprüche 1 oder 3 bis 13.
